# EUROPÄISCHE PATENTANMELDUNG

(11) **EP 2 418 176 A1**
(43) Veröffentlichungstag der Anmeldung: **15.02.2012**
(21) Anmeldenummer: 10172647.9
(22) Anmeldetag: 12.08.2010
(51) Int. Cl.: C02F 1/04, C02F 1/20, C02F 1/02, C02F 9/00, B01D 11/04, B01D 3/38, C02F 1/72, C02F 3/00, C07C 201/16, C02F 1/78, C02F 101/38, C02F 103/36

(54) **Verfahren zur Aufreinigung von Abwässern aus der Aufarbeitung vom rohem Mononitrobenzol**

(71) Anmelder: BASF SE, 67056 Ludwigshafen (DE)
(72) Erfinder: Leschinski, Julia, 68161 Mannheim (DE); Denissen, Leo, Brasschat (BE); Heck, Ludwig E., 68535 Edingen-Neckarhausen (DE); Gammer, Peter, 210019 Nanjing (DE); Van De Voorde, Bart, 2060 Antwerpen (DE); Heussler, Andreas, 67454 Hassloch (DE); Neto, Samuel, 1050 Bruxelles (BE)

(57) **Zusammenfassung**

Die Erfindung betrifft ein Verfahren zur Aufarbeitung von Abwässern, die bei der Aufreinigung von rohen aromatischen Nitroverbindungen nach der Nitrierung von aromatischen Verbindungen erhalten werden, umfassend folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen,
(b) optional Entfernung organischer Bestandteile aus mindestens einem Teil der in Schritt (a) erhaltenen wässrigen Phase oder wässrigen Phasen durch Strippung vorzugsweise mit Wasserdampf,
(c) Entfernung organischer Verbindungen aus mindestens einem Teil der aus Schritt (a) beziehungsweise Schritt (b) resultierenden wässrigen Phase oder wässrigen Phasen durch thermischen und/oder oxidativen Abbau,
(d) destillative Abreicherung von Ammoniak aus zumindest einem Teil der aus Schritt (c) resultierenden wässrigen Phase oder wässrigen Phasen, und
(e) optional Zuführung zumindest eines Teiles der aus Schritt (d) resultierenden wässrigen Phase oder der wässrigen Phasen zu einer biologischen Abwasseraufbereitung.

## Beschreibung

Die Erfindung betrifft ein Verfahren zur Aufarbeitung von Abwässern, die bei der Aufreinigung von rohen aromatischen Nitroverbindungen nach der Nitrierung von aromatischen Verbindungen erhalten werden, umfassend folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen,
(b) optional Entfernung organischer Bestandteile aus mindestens einem Teil der in Schritt (a) erhaltenen wässrigen Phase oder wässrigen Phasen durch Strippung vorzugsweise mit Wasserdampf,
(c) Entfernung organischer Verbindungen aus mindestens einem Teil der aus Schritt (a) beziehungsweise Schritt (b) resultierenden wässrigen Phase oder wässrigen Phasen durch thermischen und/oder oxidativen Abbau,
(d) destillative Abreicherung von Ammoniak aus zumindest einem Teil der aus Schritt (c) resultierenden wässrigen Phase oder wässrigen Phasen, und
(e) optional Zuführung zumindest eines Teiles der aus Schritt (d) resultierenden wässrigen Phase oder der wässrigen Phasen zu einer biologischen Abwasseraufbereitung.

Aromatische Nitroverbindungen, insbesondere Mononitrobenzol, werden in kommerziellen Verfahren üblicherweise durch direkte Nitrierung von Benzol mit einer Mischung aus Salpetersäure und Schwefelsäure, der sogenannten Nitriersäure, hergestellt. Bei dieser Reaktion handelt es sich um eine Zweiphasenreaktion, deren Reaktionsgeschwindigkeit durch den Massentransfer zwischen den Phasen und durch die chemische Kinetik determiniert wird. Von besonderer industrieller Bedeutung sind kontinuierliche Verfahren, wobei die adiabatische Reaktionsführung in jüngerer Zeit besondere Bedeutung erlangt hat.

Das aus der Nitrierung der aromatischen Ausgangsverbindung erhaltene Reaktionsprodukt (Rohprodukt), insbesondere Mononitrobenzol, fällt zunächst als zweiphasiges Gemisch an, wobei die organische Phase neben der organischen Nitroverbindung weitere organische Nebenprodukte und nicht umgesetzte organische Ausgangsstoffe enthält. Die wässrige Phase umfasst neben organischen Bestandteilen wie zum Beispiel Mononitrobenzol und Benzol natürlich unverbrauchte Nitriersäure. Die säurehaltige wässrige Phase wird nach dem Stand der Technik üblicherweise in einem Säurekonzentrator (sulfuric acid concentration, SAC) aufkonzentriert und wieder in die Nitrierungsreaktion zurückgeführt.

Die aus der Nitrierung erhaltene organische Phase, nachfolgend als rohe aromatische Nitroverbindung bezeichnet, ist sowohl mit organischen Nebenkomponenten wie z. B. Dinitrobenzol, Benzol, Nitrophenolen als auch mit Nitriersäure verunreinigt und bedarf einer mehrstufigen Aufarbeitung, die hohen Anforderungen hinsichtlich Energie- und Prozesskosten, Ausbeute und Aufreinigung von Abfallströmen nach umwelttechnischen Gesichtspunkten genügen muss.

Verfahren zur Aufarbeitung von rohen aromatischen Nitroverbindungen sind aus dem Stand der Technik bekannt.

Üblicherweise schließt sich an die Abtrennung der rohen aromatischen Nitroverbindung (organische Phase), insbesondere Mononitrobenzol, von der säurehaltigen wässrigen Phase mindestens ein Waschschritt der rohen aromatischen Nitroverbindung mit Wasser oder einer wässrigen Lösung an. Eine mehrstufige, d. h. sequentielle, Durchführung der Schritte Waschen - Abtrennen - Waschen - Abtrennen - usw. ist aus dem Stand der Technik bekannt. Üblicherweise wird in mindestens einer Waschstufe eine Base zugegeben. Durch Zugabe von Basen beträgt der pH-Wert im Anschluss an das Waschen üblicherweise mindestens 8.

Die wässrige Phase, welche aus dem vorgenannten Waschvorgang resultiert (nachfolgend als Abwasser bezeichnet), umfasst neben Wasser und Salzen noch organische Verbindungen wie Mononitrobenzol, Dinitrobenzol, Nitrophenole (mono- und polynitrierte Phenole) und Benzol.

Die erforderliche Abreicherung der unerwünschten organischen Bestandteile aus dem Abwasser vor dessen Einleitung in eine biologische Abwasseraufbereitung (Kläranlage) stellt einen signifikanten Anteil der Investitionskosten bei der Installation von Anlagen zur Herstellung von aromatischen Nitroverbindungen dar.

Die Abtrennung der organischen Bestandteile aus dem Abwasser kann beispielsweise durch eine ggf. mehrstufige Extraktion mit Benzol erfolgen. Ein bekanntes Verfahren ist die ggf. mehrstufige Strippung der organischen Bestandteile mit Wasserdampf, wobei insbesondere leichtsiedende organische Verunreinigungen entfernt werden, und anschließende thermolytische oder oxidative Zersetzung noch vorhandener organischer Bestandteile im resultierenden Abwasser.

So beschreibt die EP 0 953 546 A2 ein Verfahren zum Abbau von aromatischen Nitroverbindungen in Abwässern durch Erhitzung des Abwassers auf Temperaturen von 150 bis 350 °C unter einem Druck von 10 bis 300 bar. Die EP 0 953 546 A2 führt aus, dass die so behandelten Abwässer problemlos biologisch gereinigt werden können. Die EP 1 593 654 A1 beschreibt ein Verfahren zur Aufarbeitung von alkalischen Abwässern, die bei der Wäsche von rohem Nitrobenzol entstehen, wobei das rohe Nitrobenzol durch adiabate Nitrierung von Benzol mit Nitriersäure hergestellt und anschließend in einer sauren Wäsche und danach in einer alkalischen Wäsche gewaschen wird, wobei ein alkalisches Abwasser enthaltend Benzol in Konzentrationen von 100 bis 3000 ppm und Nitrobenzol in Konzentrationen von 1000 bis 10000 ppm erhalten wird, wobei aus dem alkalischen Abwasser anschließend nicht gelöst vorliegendes Benzol und/oder Nitrobenzol abgeschieden wird, und optional aus dem alkalischen Abwasser anschließend restliches Benzol und/oder Nitrobenzol durch Strippen entfernt wird, und das alkalische Abwasser anschließend unter Ausschluss von Sauerstoff auf Temperaturen von 150 bis 500 °C unter Überdruck erhitzt wird. Die EP 1 593 654 A1 führt aus, dass die so erhaltenen Abwässer nach Überprüfung des Phenolatgehaltes in eine biologische Kläranlage abgegeben werden können.

Durch die Zersetzung von Nitroverbindungen in wässrigen Abwässern nach dem Stand der Technik entsteht jedoch Ammoniak, der sich in biologischen Kläranlagen nachteilig auswirkt. Einer biologischen Abwasseraufbereitung zugeführtes NH₃-haltiges Abwasser muss zunächst einer Nitrifikation unterzogen werden. Als Nitrifikation bezeichnet man die bakterielle Oxidation von Ammoniak (NH₃) zu Nitrat (NO₃⁻). Sie besteht aus zwei gekoppelten Teilprozessen: Im ersten Teil wird Ammoniak zu Nitrit oxidiert, das im zweiten Teilprozess zu Nitrat oxidiert wird. Die Nitrifikation ist mit einer Produktion von Säure (H⁺-Bildung) verbunden, der pH-Wert wird abgesenkt, wenn die gebildete Säure nicht neutralisiert wird, etwa durch Umsetzung mit Calciumcarbonat (CaCO₃). Die gebildete Säure belastet die Pufferkapazität des Wassers und kann das Wasser bzw. den Boden versäuern. Da nitrifizierende Mikroorganismen nur im neutralen bis leicht alkalischen Bereich stoffwechseln, kann durch die Versäuerung die vollständige Umwandlung des fischtoxischen Ammoniums/Ammoniak in Abwasser-Kläranlagen verhindert werden (Autoinhibition).

Das gebildete Nitrat wird anschließend in einer weiteren Stufe der biologischen Abwasserbehandlung einer Denitrifikation unter Bildung von N₂ unterzogen. Unter Denitrifikation versteht man die Umwandlung des im Nitrat (NO₃⁻) gebundenen Stickstoffs zu molekularem Stickstoff (N₂) durch bestimmte heterotrophe und einige autotrophe Bakterien, die danach als Denitrifikanten bezeichnet werden.

Es wäre somit wünschenswert, ein Abwasser aus oben genanntem Prozess bereitzustellen, welches Stickstoff in möglichst geringen Mengen enthält, so dass insbesondere eine Nitrifikation als erste Stufe einer biologischen Abwasseraufbereitung unterbleiben kann. Dies hätte große ökonomische und ökologische Vorteile. Gleichzeitig sollte der energetische Aufwand zur Erzeugung des genannten Abwassers möglichst gering sein.

Somit war die Aufgabe der vorliegenden Erfindung, ein Verfahren zur Aufarbeitung von Abwässern aus der Nitrierung von aromatischen Verbindungen bereitzustellen, welches die vorgenannten Nachteile nicht oder in geringerem Umfang aufweist. Insbesondere sollte der Ammoniakgehalt im Abwasser, welches bei der Nitrierung von aromatischen Verbindungen und anschließender Entfernung organischer Bestandteile anfällt, reduziert werden. Die anschließende Denitrifikation in einer ersten Stufe einer anschließenden biologischen Abwasseraufbereitung sollte möglichst unterbleiben können. Gleichzeitig sollte das Verfahren mit möglichst geringem Energieraufwand operieren und technisch einfach zu realisieren sein.

Die vorgenannten Aufgaben werden gelöst durch das erfindungsgemäße Verfahren zur Aufarbeitung von Abwässern, die bei der Aufreinigung von rohen aromatischen Nitroverbindungen nach der Nitrierung von aromatischen Verbindungen erhalten werden. Bevorzugte Ausführungsformen sind den Ansprüchen und der nachfolgenden Beschreibung zu entnehmen. Kombinationen bevorzugter Ausführungsformen verlassen den Rahmen der vorliegenden Erfindung nicht, insbesondere, was Kombinationen bevorzugter Ausführungsformen unterschiedlicher Schritte des erfindungsgemäßen Verfahrens angeht.

Erfindungsgemäß umfasst das Verfahren folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen,
(b) optional Entfernung organischer Bestandteile aus mindestens einem Teil der in Schritt (a) erhaltenen wässrigen Phase oder wässrigen Phasen durch Strippung vorzugsweise mit Wasserdampf,
(c) Entfernung organischer Verbindungen aus mindestens einem Teil der aus Schritt (a) beziehungsweise Schritt (b) resultierenden wässrigen Phase oder wässrigen Phasen durch thermischen und/oder oxidativen Abbau,
(d) destillative Abreicherung von Ammoniak aus mindestens einem Teil der aus Schritt (c) resultierenden wässrigen Phase oder wässrigen Phasen, und
(e) optional Zuführung zumindest eines Teiles der aus Schritt (d) resultierenden wässrigen Phase zu einer biologischen Abwasseraufbereitung.

Das vorliegende Verfahren ist insbesondere für die Aufarbeitung von Abwässern geeignet, welche bei der Aufreinigung von rohem Nitrobenzol entstehen, welches durch Nitrierung von Benzol erhalten wurde. Aus diesem Grund wird das Verfahren exemplarisch anhand dieser speziellen Aufreinigung erläutert. Der Fachmann kann jedoch die genannten Ausführungsformen ohne Schwierigkeiten auf andere aromatische Ausgangsverbindungen als Benzol beziehungsweise auf andere Produkte als Mononitrobenzol übertragen.

Die Abwässer, die mit dem erfindungsgemäßen Verfahren behandelt werden können, stammen vorzugsweise aus Nitrierungsanlagen zur Nitrierung von aromatischen Verbindungen wie z.B. Nitrobenzolanlagen, Dinitrotoluolanlagen und Nitrotoluol- und Nitroxylolanlagen.

Die Nitrierung von aromatischen Ausgangsverbindungen (insbesondere Benzol) zu aromatischen Nitroverbindungen (insbesondere Mononitrobenzol) kann nach den aus dem Stand der Technik bekannten Verfahren erfolgen. Geeignete Verfahren werden beispielsweise in der EP 043 6 443 A2 und in Kirk-Othmer, Encyclopedia of Chemical Technology, Vol. 17, "Nitrobenzene and Nitrotoluenes" beschrieben.

### Schritt (a)

Der Begriff "Waschen" kennzeichnet im Rahmen der vorliegenden Erfindung das Inkontaktbringen einer organischen Phase mit einer wässrigen Phase, wobei mindestens ein Bestandteil der organischen Phase zumindest teilweise in die wässrige Phase übergeht. Das Waschen organischer Phasen und die anschließende oder gleichzeitige Abtrennung der Phasen ist dem Fachmann an sich bekannt und kann in an sich bekannten Apparaturen wie Misch-Abtrenneinheiten (Mischeinheit gefolgt von Abtrenneinheit) oder Extraktoren wie z. B. Extraktionskolonnen erfolgen.

Die in der vorgenannten Nitrierung der aromatischen Ausgangsverbindung (insbesondere Benzol) hergestellte rohe aromatische Nitroverbindung (insbesondere Mononitrobenzol) wird erfindungsgemäß zunächst in einem ein- oder mehrstufigen Prozess mit Wasser oder einer wässrigen Lösung in Kontakt gebracht, wobei mindestens eine organische Phase und mindestens eine wässrige Phase erhalten wird (Waschvorgang). Gleichzeitig oder bevorzugt anschließend erfolgt die Abtrennung der wässrigen Phase beziehungsweise der wässrigen Phasen.

Vorzugsweise erfolgt das Waschen unter Vermischen und/oder Rühren, so dass ein ausreichender Kontakt zwischen organischer Phase und wässriger Phase vorliegt.

Das Waschen kann erfindungsgemäß in einem ein- oder mehrstufigen Prozess erfolgen, vorzugsweise indem die rohe aromatische Nitroverbindung den Waschvorgang mit Wasser oder einer wässrigen Lösung und den Abtrennvorgang von der wässrigen Phase einmal oder nacheinander mehrmals durchläuft. Im letzteren Fall wird Schritt (a) mehrfach nacheinander durchlaufen. Sofern Schritt (a) mehrstufig durchgeführt wird, können eine einzige oder mehrere wässrige Phasen entstehen, die unterschiedliche Gehalte an extrahierten Verbindungen oder gegebenenfalls unterschiedliche Verbindungen enthalten.

In einer bevorzugten Ausführungsform umfasst Schritt (a) die mehrfache Ausführung der Stufen Waschen und Abtrennen, wobei eine einzige wässrige Phase mehrfach mit einer organischen Phase in Kontakt gebracht wird. In dieser Ausführungsform entsteht lediglich eine aus Stufe (a) resultierende wässrige Phase, da diese nacheinander in mehreren Stufen mit der organischen Phase in Kontakt gebracht wird und schließlich das Abwasser aus Schritt (a) bildet.

In einer weiteren bevorzugten Ausführungsform entstehen mehrere, insbesondere zwei separate Abwasserströme, die aus der mehrstufigen Durchführung von Schritt (a) resultieren. Es ist möglich, lediglich ein Teil, insbesondere eine der aus Schritt (a) resultierenden wässrigen Phasen den erfindungsgemäß nachfolgenden Schritten zuzuführen. Alternativ ist es auch möglich, die genannten mehreren wässrigen Phasen zu vereinigen und anschließend den erfindungsgemäß nachfolgenden Schritten zuzuführen.

Die aus Schritt (a) resultierende wässrige Phase beziehungsweise die wässrigen Phasen werden nachfolgend gemeinsam als Abwasser bezeichnet.

Im Rahmen von Schritt (a) erfolgt vorzugsweise gleichzeitig die Zugabe einer Base, beispielsweise ein Alkalimetallcarbonat wie Natriumcarbonat oder ein Alkalimetallhydroxid, vorzugsweise ein Alkalimetallhydroxid, z.B. Lithiumhydroxid, Natriumhydroxid, Kaliumhydroxid und/oder Rubidiumhydroxid, insbesondere Natriumhydroxid, so dass der pH-Wert des Abwassers nach Schritt (a) von 6 bis 14, vorzugsweise 8 bis 14, insbesondere 9 bis 13 beträgt. Die Zugabe der Base erfolgt vorzugsweise in Form von wässrigen Lösungen der Base, d. h. zumindest Teile der in Schritt (a) eingesetzten wässrigen Lösung enthalten die genannte Base. Die vorzugsweise im Überschuss zugesetzte Base neutralisiert die resultierende Nitriersäure unter Bildung von löslichen Salzen.

In einer Ausführungsform von Schritt (a) erfolgt zunächst eine saure Wäsche der rohen aromatischen Nitroverbindung. Bevorzugt wird dabei eine Säurekonzentration von 0,5 bis 2 Gew.-% Schwefelsäure bezogen auf die wässrige Phase eingestellt. Alternativ kann unmittelbar eine sogenannte alkalische Wäsche unter Zugabe einer Base erfolgen.

Das aus Schritt (a) resultierende Abwasser enthält üblicherweise neben Wasser noch Restmengen an Benzol und Nitrobenzol sowie Nitrophenole. Das aus Schritt (a) resultierende Abwasser enthält typischerweise Benzol in Konzentrationen von 10 bis 3000 ppm, vorzugsweise von 100 bis 1000 ppm und Nitrobenzol in Konzentrationen von 500 bis 10000 ppm, vorzugsweise von 1200 bis 8000 ppm. Das Abwasser enthält ferner üblicherweise Nitrophenolate in einer Konzentration von 1000 bis 20000 ppm, insbesondere 2000 bis 8000 ppm. Die Einheit ppm bezieht sich im Rahmen der vorliegenden Erfindung grundsätzlich auf Gewichtsanteile.

Insbesondere seien folgende Nitrophenole, die auch in Form ihrer wasserlöslichen Salze vorliegen können, genannt: Mono-, Di- und Trinitrophenole, Mono-, Di- und Trinitrokresole, Mono-, Di- und Trinitroresorcine, Mono-, Di-und Trixylenole. Als Salzbildner kommen alle Metalle in Betracht, die mit den Nitrophenolen wasserlösliche Salze zu bilden vermögen. Bevorzugt seien die Alkalimetalle genannt, z.B. Lithium, Natrium, Kalium und Rubidium.

In einer bevorzugten Ausführungsform wird in Anschluss an Schritt (a) und vor Durchführung von Schritt (b) beziehungsweise Schritt (c) aus dem Abwasser noch enthaltenes, nicht gelöst vorliegendes Benzol und/oder Nitrobenzol abgetrennt.

Die Abtrennung des nicht gelöst vorliegenden Nitrobenzols kann dabei durch Abscheider, Absetzbehälter oder andere Phasentrennapparaturen erfolgen. Bevorzugt wird ein Absetzbehälter eingesetzt. Die genannte Abtrennung kann alternativ in Form einer Extraktion durchgeführt werden, wie sie in der WO 2009/027416 beschrieben wird, auf deren Inhalt hiermit in vollem Umfang Bezug genommen wird.

Das so abgetrennte Benzol und/oder Nitrobenzol wird dann bevorzugt wieder dem Nitrierprozess bzw. dem rohen Nitrobenzol zugeführt.

### Schritt (b)

In einer bevorzugten Ausführungsform erfolgt gemäß Schritt (b) die Entfernung organischer Bestandteile aus mindestens einem Teil der in Schritt (a) erhaltenen wässrigen Phase oder wässrigen Phasen durch Strippung.

Unter Strippen ist die Entfernung von bestimmten flüchtigen Bestandteilen aus Flüssigkeiten durch das Durchleiten von Gasen (Luft, Wasserdampf, etc.) zu verstehen, wobei die genannten Bestandteile in die Gasphase übergeführt werden beziehungsweise mit der Gasphase aus der Flüssigkeit ausgetragen werden.

Vorzugsweise wird die Strippung im Rahmen der vorliegenden Erfindung mit Wasserdampf durchgeführt. Die Strippung erfolgt vorzugsweise in einer Strippkolonne, wobei die organischen Bestandteile, insbesondere Benzol und Nitrobenzol, über Kopf abgetrennt werden. Die Strippkolonne ist vorzugsweise eine röhrenförmige Einrichtung mit Einbauten zum intensiven Stoffaustausch von gasförmiger und flüssiger Phase. Vorzugsweise wird die Flüssigkeit im Gegenstrom, das heißt gegen die Fließrichtung des Gases, durch die Strippkolonne geleitet. Entsprechende Verfahren und Kolonnen sind dem Fachmann bekannt und z.B. in W. Meier, Sulzer, Kolonnen für Rektifikation und Absorption, in: Technische Rundschau Sulzer, 2 (1979), Seite 49 ff, beschrieben. Bevorzugte Verfahren sind beispielsweise die Strippung in einer Kolonne, die vorzugsweise mit zufälligen Schüttungen aus Füllkörpern, mit strukturierten Packungen oder mit Stoffaustauschböden wie z.B. Siebböden, Glockenböden, Tunnelböden oder Thormannböden gefüllt ist. Vorzugsweise wird die Strippung gemäß Schritt (b) bei einem absoluten Druck von 0,1 bis 10 bar, insbesondere 1 bis 5 bar und einer Temperatur von 35 bis 180 °C, insbesondere bei 100 bis 160 °C durchgeführt.

Das im Rahmen von Schritt (b) anfallende, die aromatische Ausgangsverbindung und die aromatische Nitroverbindung sowie nicht-aromatische organische Verbindungen enthaltende Kondensat wird anschließend einem Phasenscheider zugeführt, wobei die organische Phase bevorzugt in die Wäsche in Schritt (a) zurückgeführt wird und die wässrige Phase erneut Schritt (b) zugeführt wird. In einer bevorzugten Ausführungsform wird der über Kopf der Strippkolonne erhaltene Wasserdampf einschließlich der organischen Bestandteile als Wärmeüberträger im Rahmen von Schritt (d) verwendet und das dabei anfallende Kondensat einem Phasenscheider zugeführt, wobei die organische Phase bevorzugt in die Wäsche in Schritt (a) zurückgeführt wird und die wässrige Phase vorzugsweise erneut Schritt (b) zugeführt wird. Diese bevorzugte Ausführungsform wird im Rahmen von Schritt (d) weiter erläutert.

Aus Sicherheitsgründen ist eine fehlerfreie Funktion von Schritt (b) wünschenswert. Eine Fehlfunktion der Strippkolonne kann beispielsweise durch redundante Sicherheitseinrichtungen überwacht werden.

Bevorzugt wird in Schritt (b) ein alkalisches Abwasser erhalten, das Benzol nur noch in Konzentrationen von höchstens 30 ppm, insbesondere höchstens 5 ppm, und Nitrobenzol in Konzentrationen von höchstens 50 ppm, insbesondere höchstens 20 ppm, enthält.

### Schritt (c)

Im Rahmen der vorliegenden Erfindung erfolgt im Rahmen von Schritt (c) die Entfernung organischer Verbindungen aus mindestens einem Teil der aus Schritt (a) beziehungsweise Schritt (b) resultierenden wässrigen Phase oder wässrigen Phasen durch thermischen und/oder oxidativen Abbau.

Die Entfernung organischer Verbindungen aus mindestens einem Teil der aus Schritt (a) beziehungsweise Schritt (b) resultierenden wässrigen Phase oder wässrigen Phasen durch thermischen Abbau wird nachfolgend als Thermolyse bezeichnet. Alternativ erfolgt der Abbau oxidativ, insbesondere durch Ozon (Ozonolyse).

Vorzugsweise wird in Schritt (c) das aus den Schritten (a) beziehungsweise (b) erhaltene Abwasser, das noch mit organischen Salzen der Nitrohydroxyaromaten beladen ist, unter Ausschluss von Sauerstoff auf Temperaturen von 150 bis 500 °C, vorzugsweise von 250 bis 350 °C, besonders bevorzugt 250 bis 300 °C unter Überdruck erhitzt. Es ist auch möglich, die Abwässer unter Inertgasatmosphäre bzw. unter einem Inertgas-Vordruck von beispielsweise 0,1 bis 100 bar zu erhitzen. Als Inertgase sind z.B. Stickstoff und/oder Argon geeignet. Je nach Temperatur und gegebenenfalls Inertgas-Vordruck stellen sich beim Erhitzen der Abwässer bevorzugt absolute Drücke im Bereich von 50 bis 350 bar, besonders bevorzugt 50 bis 200 bar, ganz besonders bevorzugt 70 bis 130 bar, ein. Die Erhitzung des alkalischen Abwassers und thermische Druckzersetzung der organischen Bestandteile wie Benzol, Nitrobenzol und Nitrophenole erfolgt dabei üblicherweise für 5 bis 120 min, bevorzugt 20 bis 45 min.

Das Abwasser wird in Druckbehältern bei einer Temperatur von 150 °C bis 350 °C, vorzugsweise 250 °C bis 300 °C, einem Druck von 10 bar bis 200 bar, vorzugsweise 70 bar bis 150 bar und einem pH-Wert des Abwassers von 8 bis 14, vorzugsweise 9 bis 13 thermolysiert.

Als Druckbehälter können alle aus dem Stand der Technik bekannten Druckbehälter eingesetzt werden, die für die oben genannten Temperaturen und Drücke ausgelegt sind. Für eine kontinuierliche Verfahrensführung eignen sich beispielsweise Rohrreaktoren und in Kaskade geschaltete Autoklaven.

In einer bevorzugten Ausgestaltung wird das Abwasser mit einer Pumpe durch einen Wärmetauscher gefördert, in dem es z.B. auf 280 °C vorgewärmt wird. Anschließend wird das vorgewärmte Abwasser durch Direkteinspeisung von 100 bar Dampf oder durch eine indirekte Beheizung auf 300 °C erhitzt. Nach einer Verweilzeit von 20 min bis 60 min wird die Reaktionslösung im Gegenstrom mit dem Feed abgekühlt und entspannt.

Zur kontinuierlichen Ausgestaltung des Verfahrens benutzt man vorzugsweise einen Rohrreaktor, in welchem die Strömung der Flüssigkeit so eingestellt ist, dass eine Rückvermischung unterbleibt.

Vorzugsweise wird Schritt (c) als Thermolyse in Abwesenheit eines Inertgases bei einem absoluten Druck von 50 bis 350 bar und einer Temperatur von 150 bis 500 °C durchgeführt.

In einer alternativen Ausführungsform erfolgt die Entfernung organischer Verbindungen, insbesondere Nitrophenole, aus mindestens einem Teil der aus Schritt (a) beziehungsweise Schritt (b) resultierenden wässrigen Phase oder wässrigen Phasen durch oxidativen Abbau, bevorzugt durch Ozonolyse.

Verfahren zur Ozonolyse von Abwässern aus der Nitrierung von aromatischen Verbindungen sind dem Fachmann ebenfalls bekannt. Vorzugsweise erfolgt der oxidative Abbau durch Behandlung mit Ozon bei 20 bis 100 °C, einem Druck von 1,5 bis 10 bar und einem pH-Wert von 3 bis 12. Die Ozonolyse wird vorzugsweise kontinuierlich in einer Kaskade von Reaktoren, die im Gegenstrom geschaltet sind, durchgeführt. Auf diese Weise wird das Ozon so vollständig aus dem Gasstrom entfernt, dass man meist auf eine Restozonvernichtung verzichten kann. Entsprechende Verfahren sind insbesondere in der EP 0 378 994 A1 beschrieben, auf deren Inhalt hiermit in vollem Umfang Bezug genommen wird.

Nach Abschluss von Schritt (c) beträgt der Gehalt an Nitrophenolen im Abwasser vorzugsweise höchstens 100 ppm, insbesondere höchstens 30 ppm. Der Gehalt an Ammoniak im Abwasser, welches aus Schritt (c) resultiert, beträgt üblicherweise von 100 bis 3000 ppm, insbesondere von 500 bis 1500 ppm. Der Gehalt an Nitrat im Abwasser, welches aus Schritt (c) resultiert, beträgt üblicherweise von 5 bis 500 ppm, insbesondere von 20 bis 300 ppm. Der Gehalt an Nitrit im Abwasser, welches aus Schritt (c) resultiert, beträgt üblicherweise von 200 bis 10000 ppm, insbesondere von 500 bis 3000 ppm. Der Gehalt an organisch gebundenem Stickstoff (atomar berechnet) im Abwasser, welches aus Schritt (c) resultiert, beträgt üblicherweise von 5 bis 200 ppm, insbesondere von 5 bis 40 ppm.

### Schritt (d)

Gemäß der vorliegenden Erfindung erfolgt im Rahmen von Schritt (d) die destillative Abreicherung von Ammoniak aus der aus Schritt (c) resultierenden wässrigen Phase oder wässrigen Phasen. Die Destillation der wässrigen Phase(n) kann dabei nach an sich bekannten Verfahren erfolgen.

Vorzugsweise wird die Destillation gemäß Schritt (d) bei einem absoluten Druck von 0,1 bis 10 bar, insbesondere 1 bis 5 bar durchgeführt, wobei der genannte Druck am Kopf der Destillationsapparatur vorliegt.

Vorzugsweise wird die destillative Entfernung von Ammoniak gemäß Schritt (d) bei einer Temperatur von 80 bis 140 °C durchgeführt, wobei die genannte Temperatur am Kopf der Destillationsapparatur vorliegt.

Bevorzugt beträgt der Gehalt an Ammoniak in der wässrigen Phase in Anschluss an Schritt (d) höchstens 100 ppm, insbesondere höchstens 20 ppm, besonders bevorzugt höchstens 10 ppm.

Die destillative Abreicherung von Ammoniak aus der aus Schritt (b) resultierenden wässrigen Phase(n) wird bevorzugt bei Temperaturen von 50 bis 160 °C und absoluten Drücken von 0,1 bis 10 bar, insbesondere 1 bis 5 bar realisiert.

Die destillative Abreicherung von Ammoniak kann in bekannten Apparaturen erfolgen. Die Verdampfung von Ammoniak erfolgt geeigneter weise in einer Destillationskolonne. Die Kolonne kann dabei mit dem Fachmann bekannten unstrukturierten Packungen wie z.B. zufälligen Schüttungen aus Füllkörpern, mit strukturierten Packungen oder mit Stoffaustauschböden wie z.B. Siebböden, Glockenböden, Tunnelböden oder Thormannböden gefüllt sein. In einer besonders bevorzugten Ausführungsform werden unstrukturierte oder strukturierte Packungen und Stoffaustauschböden miteinander kombiniert, so dass ein optimaler Trenneffekt erreicht wird..

Der Wärmeeintrag in die Destillationskolonne erfolgt vorzugsweise durch einen angekoppelten Verdampfer. Hierdurch lässt sich Schritt (d) in energetisch besonders günstiger Weise in das Verfahren integrieren.

Ein Verdampfer ist in der Verfahrenstechnik ein Apparat zur Umwandlung einer Flüssigkeit in ihren dampfförmigen Zustand. Zur Verdampfung der Flüssigkeit ist die Zuführung thermischer Energie erforderlich. Verdampfer bestehen deshalb in der Regel aus einer Oberfläche, durch die Wärme von einem Wärmeträger, vorzugsweise eine Flüssigkeit, auf die zu verdampfende Flüssigkeit übertragen wird. Im Rahmen der vorliegenden Erfindung bevorzugt sind Verdampfer, welche die erforderliche Wärme indirekt übertragen (kein direkter Kontakt zwischen Wärmeträger und zu verdampfende Flüssigkeit). Entsprechend Verdampfer sind dem Fachmann an sich bekannt. Geeignete Verdampfer sind insbesondere Naturumlaufverdampfer, Zwangsumlaufverdampfer, Kettle-Verdampfer, Dampfkessel, Fallfilmverdampfer und Dünnschichtverdampfer. Besonders geeignet sind Verdampfer auf Basis eines Rohrbündels. Besonders bevorzugt sind Fallfilmverdampfer.

In einer besonders bevorzugten Ausführungsform erfolgt die wärmetechnische Kopplung von Schritt (d) an mindestens eine vorausgehende Stufe, insbesondere Stufe (b).

Dabei wird die aus Stufe (b) resultierende Dampfphase vorzugsweise zur indirekten Wärmeübertragung in Stufe (d) verwendet. Besonders bevorzugt wird die aus Stufe (b) resultierende Dampfphase als Wärmeüberträger in einen Verdampfer im Rahmen von Stufe (d) eingeführt.

Vorzugsweise wird der Wärmeüberträger in Anschluss an die Stufe (d) zumindest teilweise in die Stufe (a) zurückgeführt. In einer besonders bevorzugten Ausführungsform wird der Wärmeüberträger in Anschluss an die Stufe (d) einer Phasentrennung unter Erhalt einer organischen Phase und einer wässrigen Phase unterzogen, wobei die erhaltene organische Phase in die Stufe (a) zurückgeführt wird. Vorzugsweise wird die erhaltene wässrige Phase Schritt (b) zugeführt.

Das durch das erfindungsgemäße Verfahren erhältliche, ganz oder teilweise von Ammoniak befreite Abwasser kann unmittelbar, d. h. ohne weitere Trennschritte, einer biologischen Abwasseraufbereitung, insbesondere einer Kläranlage, zugeführt werden. Das hierbei erhaltene Kopfprodukt enthaltend Ammoniak wird vorzugsweise nach dem Fachmann an sich bekannten Methoden kondensiert und vorzugsweise teilweise als Kondensatrücklauf in die Destillationskolonne im Rahmen von Schritt (d) zurückgeführt und teilweise einer weiteren Aufarbeitung, vorzugsweise einer Verbrennung, zugeführt. Nicht kondensierte Bestandteile können einer weiteren Abgasbehandlung zugeführt werden.

### Schritt (e)

Im Rahmen von Schritt (e) erfolgt vorzugsweise die Zuführung zumindest eines Teiles der aus Schritt (d) resultierenden wässrigen Phase zu einer biologischen Abwasseraufbereitungsstufe.

Entsprechende Verfahren zur biologischen Abwasseraufbereitung sind dem Fachmann an sich ebenfalls bekannt und beispielsweise in Ullmann's Encyclopedia of Industrial Chemistry 7th edition (Chapter Waste Water), 2005 Wiley-VCH Verlag GmbH & Co. KGaA, Weinheim ausführlich beschrieben.

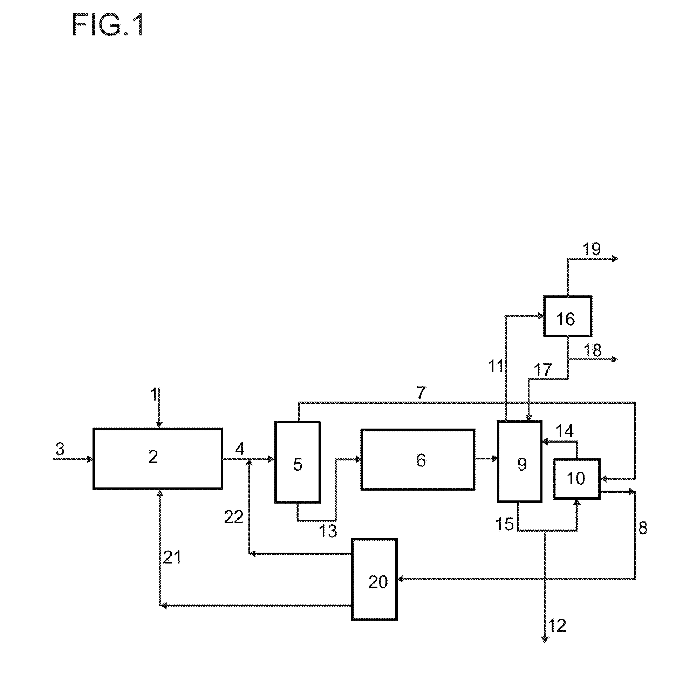

Eine bevorzugte Ausführungsform der vorliegenden Erfindung ist in Figur 1 dargestellt.

In Figur 1 bedeuten:
1 - Zuführung von Base und Wasser
2 - Wasch- und Abtrenneinheit(en)
3 - Strom von rohem Nitrobenzol
4 - Abwasserstrom
5 - Strippingeinheit
6 - Thermolyseeinheit
7 - Wasserdampfstrom aus Strippung
8 - Kondensatstrom aus Verdampfer
9 - Destillationskolonne (Ammoniakdestillation)
10 - Verdampfer
11 - Strom zum Kopfkondensator der Kolonne
12 - Strom zur biologischen Abwasseraufbereitung
13 - Sumpfprodukt aus Strippung
14 - Wasserdampfstrom aus Verdampfer
15 - Sumpfprodukt aus Ammoniakdestillation
16 - Kopfkondensator der Ammoniakdestillation
17 - Kondensatrücklauf auf die Kolonne
18 - Kopfprodukt der Ammoniakdestillation
19 - Nicht kondensierbare Komponenten des Kopfproduktes
20 - Phasenscheider
21 - organische Phase aus Phasenscheider
22 - wässrige Phase aus Phasenscheider

Der Strom von rohem Mononitrobenzol (3) aus der Nitrierung von Benzol wird einer Wasch- und Abtrenneinheit (2) zugeführt. Die Wasch- und Abtrenneinheit (2) besteht vorzugsweise aus mehreren Einheiten, in denen die Stufen Waschen und anschließend Abtrennung der wässrigen Phase mehrfach ausgeführt werden. Der Wasch- und Abtrenneinheit (2) werden eine Base, insbesondere Natriumhydroxid, sowie Wasser zusammen oder getrennt zugeführt (1) und der pH-Wert des Abwasserstromes (4) dabei auf 8 bis 14, insbesondere 9 bis 13, eingestellt. Der aus der Abtrennung der wässrigen Phase in der Wasch- und Abtrenneinheit (2) resultierende Abwasserstrom (4) wird einer Strippingeinheit (5) zugeführt, in der organische Verbindungen weitgehend abgetrennt werden. Das aus der Strippingeinheit resultierende Sumpfprodukt (13), welches der weitgehend von den organischen Verbindungen befreite Abwasserstrom ist, wird anschließend einer Thermolyseeinheit (6) zugeführt, in der restliche organische Bestandteile weitgehend zersetzt werden. Anschließend wird der Abwasserstrom der Destillationskolonne (9) zur destillativen Abreicherung von Ammoniak zugeführt. Zwecks Wärmeintegration wird der Wasserdampfstrom aus der Strippung (7) als Wärmeträgerstrom einem Verdampfer (10) zugeführt und zur Verdampfung von Teilen des Sumpfproduktes aus der Ammoniakdestillation (15) verwendet, welches als Wasserdampfstrom aus dem Verdampfer (14) in die Destillationskolonne (9) der Ammoniakdestillation zurückgeführt wird. Der Strom des abgekühlten Kondensats aus dem Verdampfer (8) wird zunächst einem Phasenscheider (20) zugeführt. Die resultierende organische Phase (21) wird in die Wasch- und Abtrenneinheit (2) zurückgeführt. Die resultierende wässrige Phase (22) wird der Strippingeinheit (5) zugeführt. Das Kopfprodukt der Destillationskolonne (11) wird in einem Kondensator (16) kondensiert, wobei ein Teil des Kondensats (17) der Ammonaikdestillation (9) erneut als Rücklauf zugeführt wird. Das nicht zurückgeführte Kondensat (18) wird entsorgt, z.B. durch Verbrennung. Die nicht kondensierten Bestandteile des Kopfproduktes (19) werden der weiteren Abgasreinigung zugeführt. Das Sumpfprodukt (12) aus der Ammoniakdestillation wird einer biologischen Abwasseraufbereitung zugeführt.

### Beispiele

### Beispiel 1

Zunächst wurde gemäß Beispiel 1 aus der Anmeldung WO 0164333 (A2) und anschließender Phasentrennung rohes Mononitrobenzol erhalten.

Die mehrstufige Wäsche des so erhaltenen rohen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3,5 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde den Verdampfern der Destillationskolonne zur Ammoniakdestillation zugeführt und dort kondensiert. Nach Kondensation des Kopfproduktes wurde die resultierende Flüssigkeit gesammelt und auf 40°C abgekühlt. Anschließend wurde die Flüssigkeit einem Abscheider zugeführt. Im Abscheider bildeten Mononitrobenzol, Benzol and nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt.

Am Kopf der Ammoniak-Destillationskolonne, die ausschließlich mit dem Kopfprodukt aus Schritt (b) des erfindungsgemäßen Verfahrens beheizt wurde, wurde ein Strom von 6,1 Tonnen pro Stunde bei 1,2 bar absolut erhalten, der im Wesentlichen Wasser und Ammoniak enthielt. Das Kopfprodukt wurde kondensiert. 6,0 Tonnen pro Stunde dieses Stromes wurden als Rückfluss in die Kolonne zurückgeführt. Die verbleibenden 0,1 Tonnen pro Stunde, die eine Ammoniakkonzentration von 20 Gew.-% enthielten, wurden verbrannt. Am Sumpf der Kolonne wurden 59,3 t/h Wasser mit einer Ammoniakkonzentration von 10 ppm erhalten.

### Vergleichsbeispiel 2

Es wurde nach Beispiel 1 aus der Anmeldung WO 0164333 (A2) und anschließender Phasentrennung Mononitrobenzol hergestellt.

Die mehrstufige Wäsche des so erhaltenen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde kondensiert und auf 40°C abgekühlt. Anschließend wurde die Flüssigkeit einem Abscheider zugeführt. Im Abscheider bildeten Mononitrobenzol, Benzol und nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt.

Am Sumpf der Strippungskolonne fielen 59,4 Tonnen Abwasser pro Stunde mit 500 Gew.-ppm Ammoniak an.

### Beispiel 3

Es wurde nach Beispiel 1 aus der Anmeldung WO 0164333 (A2) und anschließender Phasentrennung Mononitrobenzol hergestellt.

Die mehrstufige Wäsche des so erhaltenen Mononitrobenzols (Schritt a des erfindungsgemäßen Verfahrens) ergab zwei Abwasserströme. Die erste Wäsche mit einem Massenverhältnis Wasser zu Mononitrobenzol von 0,4 führte zu einem Abwasser mit 6500 Gew.-ppm phenolischen Nebenkomponenten und 3100 Gew.-ppm anderer aromatischer Komponenten wie Benzol und Mononitrobenzol, das Abwasser aus der zweiten Wäsche mit einem Verhältnis Wasser zu Mononitrobenzol von 0,3 enthielt zusammen 3225 Gew.-ppm Benzol und Mononitrobenzol. Die organischen Nebenbestandteile beider Abwasserströme wurden durch Strippung mit Wasserdampf entfernt (Schritt b des erfindungsgemäßen Verfahrens). Der absolute Druck bei der Strippung betrug 3 bar. Der Verbrauch an Wasserdampf im Rahmen von Schritt b betrug 8,3 Tonnen pro Stunde bei einem der Strippung zugeführten Abwasser-Strom von 58 Tonnen pro Stunde.

Im Kopf der zur Strippung verwendeten Kolonne wurden 7,4 Tonnen pro Stunde eines Gemisches erhalten, welches vor allem Wasser, Benzol, nicht-aromatische organische Bestandteile und Mononitrobenzol enthielt. Das genannte Kopfprodukt wurde kondensiert und auf 40°C abgekühlt. Anschließend wurde die Flüssigkeit einem Abscheider zugeführt. Im Abscheider bildeten Mononitrobenzol, Benzol and nicht-aromatische organische Bestandteile eine organische Phase, die in die Wascheinheit zurückgeführt wurde. Die wässrige Phase aus dem Abscheider, die mit organischen Bestandteilen gesättigt war, wurde zur Strippungseinheit zurückgeführt.

Am Kopf der Ammoniak-Destillationskolonne, die mit 7,4 Tonnen Frischdampf die Stunde beheizt wurde, wurde bei 1,2 bar absolut ein Strom von 6,1 Tonnen pro Stunde erhalten, der im Wesentlichen Wasser und Ammoniak enthielt. Das Kopfprodukt wurde kondensiert. 6,0 Tonnen pro Stunde dieses Stromes wurden als Rückfluss in die Kolonne zurückgeführt. Die verbleibenden 0,1 Tonnen pro Stunde, die eine Ammoniakkonzentration von 20 Gew.-% enthielten wurden verbrannt. Am Sumpf der Kolonne wurden 59,3 t/h Wasser mit einer Ammoniakkonzentration von 10 ppm erhalten.

Die erfindungsgemäßen Beispiele 1 und 3 führten gegenüber Vergleichsbeispiel 2 zu einer Reduktion des Ammoniakgehaltes im Abwasser von 500 ppm auf 10 ppm.

In Beispiel 1 betrug der Verbrauch an Wasserdampf 7,4 Tonnen pro Stunde weniger als in Beispiel 3.

Der aus Beispiel 1 und 3 resultierende Abwasserstrom kann unmittelbar der biologischen Abwasseraufbereitung zugeführt werden, wobei im Gegensatz zum Vergleichsbeispiel 2 die Denitrifikation unterbleiben kann.

## Patentansprüche

1. Verfahren zur Aufarbeitung von Abwässern, die bei der Aufreinigung von rohen aromatischen Nitroverbindungen nach der Nitrierung von aromatischen Verbindungen erhalten werden, umfassend folgende Schritte:
(a) Einstufiges oder mehrstufiges Waschen der rohen aromatischen Nitroverbindung unter Erhalt mindestens einer organischen Phase und mindestens einer wässrigen Phase sowie Abtrennung der wässrigen Phase oder der wässrigen Phasen,
(b) optional Entfernung organischer Bestandteile aus mindestens einem Teil der in Schritt (a) erhaltenen wässrigen Phase oder wässrigen Phasen durch Strippung vorzugsweise mit Wasserdampf,
(c) Entfernung organischer Verbindungen aus mindestens einem Teil der aus Schritt (a) beziehungsweise Schritt (b) resultierenden wässrigen Phase oder wässrigen Phasen durch thermischen und/oder oxidativen Abbau,
(d) destillative Abreicherung von Ammoniak aus zumindest einem Teil der aus Schritt (c) resultierenden wässrigen Phase oder wässrigen Phasen, und
(e) optional Zuführung zumindest eines Teiles der aus Schritt (d) resultierenden wässrigen Phase zu einer biologischen Abwasseraufbereitung.

2. Verfahren nach Anspruch 1, wobei die Abwässer bei der Aufreinigung von rohem aromatischem Mononitrobenzol nach Nitrierung von Benzol erhalten werden.

3. Verfahren nach Anspruch 1 oder 2, wobei der pH-Wert der wässrigen Phase nach Stufe (a) mindestens 6 beträgt.

4. Verfahren nach einem oder mehreren der Ansprüche 1 bis 3, wobei Stufe (b) ausgeführt wird.

5. Verfahren nach Anspruch 4, wobei die aus Stufe (b) resultierende Dampfphase zur indirekten Wärmeübertragung in Stufe (d) verwendet wird.

6. Verfahren nach Anspruch 5, wobei die aus Stufe (b) resultierende Dampfphase als Wärmeüberträger in einen Verdampfer im Rahmen von Stufe (d) eingeführt wird.

7. Verfahren nach Anspruch 5 oder 6, wobei der Wärmeüberträger in Anschluss an die Stufe (d) zumindest teilweise in die Stufe (a) zurückgeführt wird.

8. Verfahren nach einem oder mehreren der Ansprüche 5 bis 7, wobei der Wärmeüberträger in kondensierter Form in Anschluss an die Stufe (d) einer Phasentrennung unter Erhalt einer wässrigen Phase und einer organischen Phase unterzogen wird, wobei die organische Phase in die Stufe (a) und die wässrige Phase in die Stufe (b) zurückgeführt wird.

9. Verfahren nach einem oder mehreren der Ansprüche 1 bis 8, wobei die Destillation gemäß Schritt (d) in einer Destillationskolonne bei einem absoluten Druck von 0,1 bis 10 bar, gemessen im Kopf der Kolonne, durchgeführt wird.

10. Verfahren nach einem oder mehreren der Ansprüche 1 bis 9, wobei die destillative Abreicherung von Ammoniak gemäß Schritt (d) in einer Destillationskolonne bei einer Temperatur von 50 bis 160 °C, gemessen im Kopf der Kolonne, durchgeführt wird.

11. Verfahren nach einem oder mehreren der Ansprüche 1 bis 10, wobei der Gehalt an Ammoniak in der wässrigen Phase in Anschluss an Schritt (d) höchstens 100 ppm beträgt.

12. Verfahren nach einem oder mehreren der Ansprüche 1 bis 11, wobei Schritt (c) eine thermolytische Behandlung ist.

13. Verfahren nach einem oder mehreren der Ansprüche 1 bis 12, wobei Schritt (c) als thermolytische Behandlung bei einem absoluten Druck von 50 bis 350 bar und einer Temperatur von 150 bis 500 °C durchgeführt wird.

14. Verfahren einem oder mehreren der Ansprüche 1 bis 13, wobei die aus Schritt (c) resultierende wässrige Phase oder wässrige Phasen vollständig Schritt (d) zugeführt werden.

15. Verfahren einem oder mehreren der Ansprüche 1 bis 14, wobei Schritt (e) ausgeführt wird.
